# EUROPEAN PATENT APPLICATION

(11) **EP 3 828 443 A1**
(43) Date of publication of application: **02.06.2021**
(21) Application number: 20204448.3
(22) Date of filing: 28.10.2020
(51) Int. Cl.: F16H 55/06

(54) **ROTATION DRIVE DEVICE**

(30) Priority: 26.11.2019 JP 2019213324
(71) Applicant: Tsudakoma Kogyo Kabushiki Kaisha, Kanazawa-shi, Ishikawa-ken 921-8650 (JP)
(72) Inventor: NITTA, Tetsuya, Ishikawa-ken, 921-8650 (JP); ISHIZAKI, Junichiro, Ishikawa-ken, 921-8650 (JP)
(74) Representative: Zimmermann & Partner Patentanwälte mbB

(57) **Abstract**

Provided is a rotation drive device (1), which has a driving-force transmission mechanism (7) configured such that a drive transmission member (9) provided on a driving shaft (8) and a disk-shaped driven member (10) attached to a main shaft (4) are directly or indirectly engaged with each other and which is further configured such that an increase in diameter of the driven member (10) due to thermal expansion can be suppressed as much as possible. The driven member (10) includes an inner ring (11) attached to the main shaft (4), and an outer ring (12) attached to the inner ring (11) by shrinkage fit and having an engaging groove (13) formed to be opened on an outer circumferential surface (10b) thereof. The inner ring (11) is formed by a low thermal expansion member, which is an alloy having a thermal expansion coefficient of 5×10⁻⁶/K or less. The outer ring (12) is formed of a hardenable iron-based material.

## Description

### BACKGROUND OF THE INVENTION

### FIELD OF THE INVENTION

The present invention relates to a rotation drive device having a driving-force transmission mechanism for transmitting rotation of a driving motor to a main shaft, to which a to-be-driven object is attached, wherein the driving-force transmission mechanism includes a driving shaft connected to the driving motor, a drive transmission member provided on the driving shaft, and a disk-shaped driven member attached to the main shaft, and is configured such that the drive transmission member and the driven member are directly or indirectly engaged with each other.

### BACKGROUND ART

As rotation driving devices, for example, there is an indexing device, such as a rotary table device, which rotationally drives a main shaft, to one end of which a circular table on which a workpiece is to be placed is attached, thereby indexing the main shaft to a predetermined angular position. The indexing device includes a driving-force transmission mechanism for transmitting rotation of a driving motor to the main shaft, and thus the main shaft is rotationally driven by the driving motor via the driving-force transmission mechanism. The driving-force transmission mechanism includes a driving shaft connected to the driving motor, a drive transmission member provided on the driving shaft, and a disk-shaped driven member attached to the main shaft, and is configured such that the drive transmission member and the driven member are directly engaged with each other or to be indirectly engaged with each other via an engaging member.

As such driving-force transmission mechanisms, for example, a mechanism as disclosed in JP-A-2009-210004 (hereinafter referred to as a "conventional mechanism") has been known. The conventional mechanism is a ball reducer (ball drive mechanism), and is configured such that a worm gear as a drive transmission member and a worm wheel as a driven member are indirectly engaged with each other via balls as an engaging member. More specifically, in the conventional mechanism, the worm gear is a cylindrical member attached to an input shaft (driving shaft) and has a configuration, in which a ball groove into which the balls are to be fitted is formed in a spiral shape on an outer circumferential surface thereof. The worm wheel is a disk-shaped member attached to a shaft (main shaft), on which a table is supported, and has a configuration, in which a plurality of recesses (engaging grooves) for partially receiving the respective balls are opened on an outer circumferential surface thereof. In the conventional mechanism, the balls are received in the respective recesses of the worm wheel, and the balls are fitted in the ball groove of the worm gear, so that the worm gear and the worm wheel are indirectly engaged with each other via the balls.

### SUMMARY OF THE INVENTION

By the way, in the rotation drive device, the drive transmission member and the driven member of the driving-force transmission mechanism are engaged with each other as described above. Accordingly, as the main shaft is rotationally driven, heat is generated in the engaged portion, thereby causing the driven member to become a high temperature state as a whole. As a result, the driven member is deformed to increase in diameter by thermal expansion.

Depending on processing conditions, such as a rotational speed and a continuous driving time, the increased diameter state causes a change in indexing accuracy, which is the most important accuracy in the indexing device. Specifically, in the case of the rotation drive device having the conventional mechanism as described above, as the diameter is increased, abutting (pressure contact) of the balls against the ball groove of the worm gear and the recesses of the worm wheel is performed with a force, which is stronger than that conceived in advance. As a result, the change in indexing accuracy as described above is caused.

However, conventionally, measures to prevent an increase itself in diameter of the driven member (worm wheel) due to thermal expansion have not been taken. If such an increase in diameter is expected, the processing conditions have to be re-adjusted to cope with such a situation. Therefore, there is a problem that the processing conditions are limited.

In addition to the conventional mechanism as described above, a roller gear cam mechanism, in which a drive transmission member and a driven member are indirectly engaged with each other via rollers, and a worm gear mechanism, in which a drive transmission member and a driven member are directly engaged with each other at gear teeth, are known as the driving-force transmission mechanism of the rotation drive device. Like the conventional mechanism as described above, thermal expansion of the driven member in such a roller gear cam mechanism or a worm gear mechanism occurs during rotational driving of the main shaft. Accordingly, there may be a problem caused by thermal expansion.

The present invention has been made keeping in mind the above problems, and an object thereof is to provide a rotation drive device, which has a driving-force transmission mechanism including a drive transmission member and a driven member as described above and which is further configured such that an increase in diameter of the driven member due to thermal expansion can be suppressed as much as possible.

The present invention is based on a rotation drive device having a driving-force transmission mechanism, which is configured such that, as described above, a drive transmission member provided on a driving shaft is directly or indirectly engaged with a disk-shaped driven member attached to a main shaft.

With respect to the rotation drive device, on which the present invention is based, the driven member in the present invention includes an inner ring attached to the main shaft, and an outer ring attached to the inner ring by shrinkage fit and having an engaging groove formed to be opened on an outer circumferential surface thereof. The inner ring is formed by a low thermal expansion member, which is an alloy having a thermal expansion coefficient of 5×10⁻⁶/K or less. The outer ring is formed of a hardenable iron-based material.

According to the rotation drive device of the present invention, the driven member is not formed of a single material as in the related art, but is formed in a two-layered structure including the inner ring and the outer ring. In addition, in the driven member, the outer ring is attached to the inner ring by shrinkage fit. The shrinkage fit is a fixing technique, in which the outer ring is fitted on the inner ring by heating the outer ring, of which an inner diameter is smaller than an outer diameter of the inner ring, until the inner diameter of the outer ring becomes larger than the outer diameter of the inner ring due to thermal expansion, placing the inner ring in a through-hole of the outer ring, and then cooling the outer ring to decrease in diameter. Therefore, in the shrinkage-fitted state, the inner diameter of the outer ring is equal to the outer diameter of the inner ring, which is larger than the original inner diameter thereof (inner diameter before shrinkage fit). As a result, the outer diameter of the outer ring is larger than the original outer diameter thereof by an amount of interference with the inner ring.

Of course, the interference for shrinkage fit is set in consideration of the highest temperature which the driven member may reach during processing. More specifically, if the inner diameter of the outer ring due to thermal expansion when the driven member reaches the highest temperature is greater than the outer diameter of the inner ring, a fitted state of the outer ring on the inner ring is released. Accordingly, the interference (difference between the outer diameter of the inner ring and the inner diameter of the outer ring) is, of course, set such that the fitted state is not released even at the highest temperature. Therefore, the diameter (inner diameter and outer diameter) of the outer ring in the shrinkage-fitted state has already become larger than a diameter thereof at the highest temperature. As a result, during processing, the outer ring is prevented from increasing in diameter beyond that in the shrinkage-fitted state due to thermal expansion thereof.

In the driven member of the present invention, the inner ring is formed of the low thermal expansion member as described above. Accordingly, it is conceived that an increase in diameter of the inner ring due to thermal expansion hardly occurs at a temperature which the driven member reaches during processing. Thus, during processing, the outer ring is prevented from increasing in diameter as the inner ring increases in diameter due to thermal expansion. Therefore, according to the driven member of the present invention, even if a temperature of the driven member increases during processing, an increase in diameter of the driven member caused by an increase in temperature does not occur. Accordingly, the problems as described above caused by an increase in diameter can be prevented.

On the other hand, even if the driven member is formed only by the low thermal expansion member as described above, the driven member does not increase in diameter likewise. However, in the case of the low thermal expansion member, there is a problem in terms of manufacturing of the driven member.

Specifically, as described above, the driven member has, on the outer circumferential surface thereof, the engaging groove formed to allow engagement with the drive transmission member. In order to improve a finishing accuracy when machining for forming the engaging groove, hardening is performed on a material forming the driven member. In particular, in the case of the conventional mechanism as described above, in which the balls are used as the engaging member, a very high finishing accuracy is required for the engaging groove. However, the low thermal expansion member cannot be generally hardened due to material properties thereof. Therefore, in the low thermal expansion member, it is difficult to form an engaging groove with a high finishing accuracy or to maintain the engaging groove intact.

On the other hand, in the driven member of the present invention, the outer ring, which is a portion including the outer circumferential portion, on which the engaging groove is formed, is formed of a hardenable iron-based material. Therefore, according to the driven member, the engaging groove can be formed with a high finishing accuracy while suppressing an increase in diameter due to thermal expansion as described above.

### BRIEF DESCRIPTION OF THE DRAWINGS

Fig. 1 is a schematic sectional view showing a rotary table device as an example of a rotation drive device, to which the present invention is applied.
Fig. 2 is a plan view showing a ball drive mechanism equipped in the rotary table device shown in Fig. 1.
Fig. 3 is an A-A sectional view of a turret shown in Fig. 2.

### DETAILED DESCRIPTION OF THE INVENTION

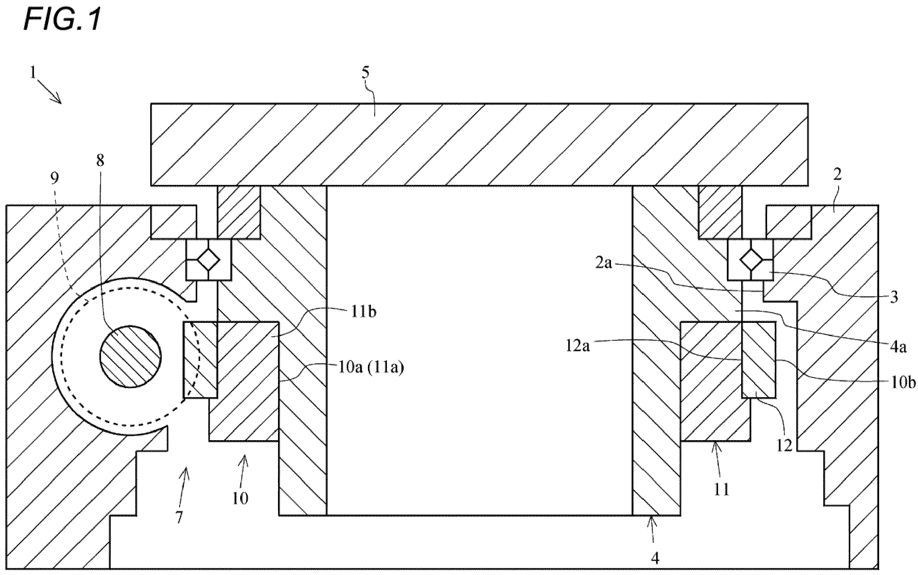

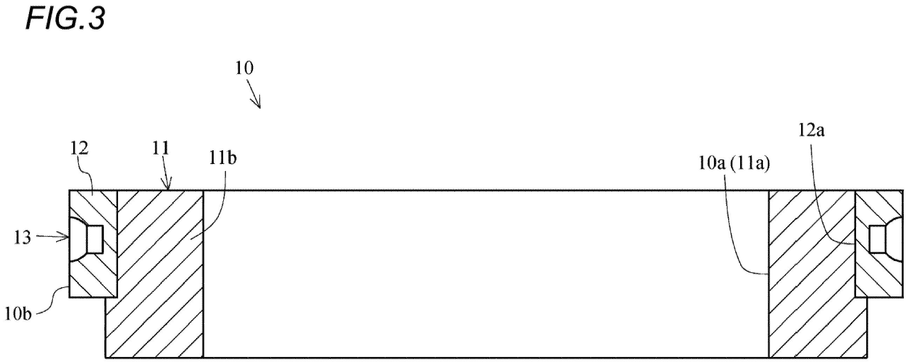

Hereinafter, an embodiment of a rotation drive device according to the present invention will be described with reference to Figs. 1 to 3. Meanwhile, the present embodiment is an example in which the present invention is applied to a rotary table device as the rotation drive device.

In Fig. 1, a rotary table device 1 as a so-called indexing device is shown. The rotary table device 1 includes a frame 2 having a receiving hole 2a, and a main shaft 4 supported in the receiving hole 2a to be rotatable relative to the frame 2 via a bearing 3. A table 5, on which a workpiece (not shown) is to be placed, is attached as a to-be-driven object on one end of the main shaft 4.

The rotary table device 1 includes a driving motor 6 as a drive source for rotationally driving the main shaft 4 and a driving-force transmission mechanism 7 for transmitting rotation of the driving motor 6 to the main shaft 4. The rotary table device 1 is configured to rotate the main shaft 4 by the driving motor 6 via the driving-force transmission mechanism 7 and thus to index the main shaft 4 to a predetermined angular position. Although not shown, the rotary table device 1 includes a clamping device for holding the main axis 4 at the indexed angular position.

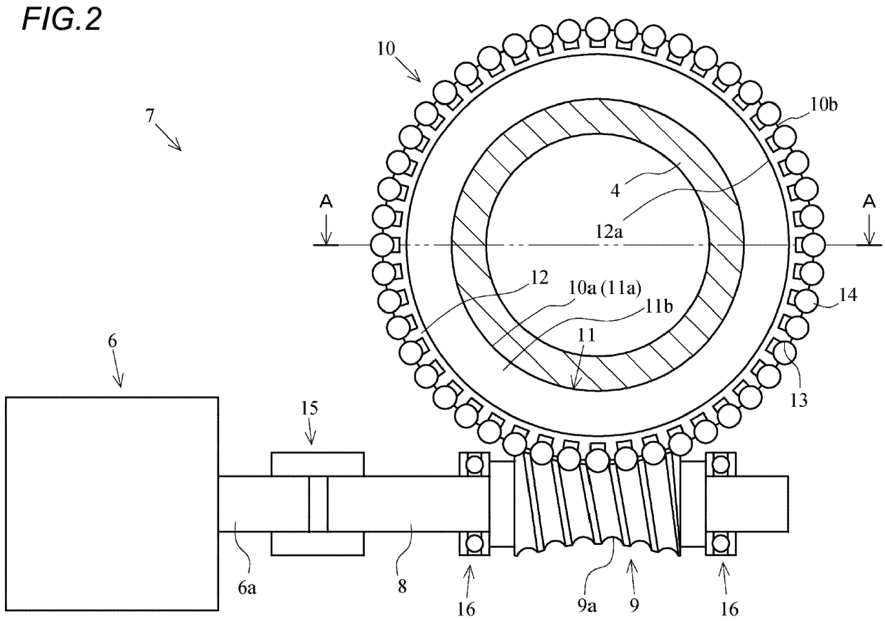

In the present embodiment, the driving-force transmission mechanism 7 is a ball drive mechanism configured as shown in Fig. 2. The ball drive mechanism 7 includes a driving shaft 8 connected to the driving motor 6, a worm 9 as a drive transmission member provided on the driving shaft 8, and a turret 10 as a driven member attached to the main shaft 4. The ball drive mechanism 7 includes balls 14 as an engaging member for engaging the worm 9 with the turret 10. The detailed configuration of the ball drive mechanism 7 is as follows.

The turret 10 is a member formed in a disk shape and having a through-hole 10a formed concentrically to extend therethrough in a plate thickness direction. As shown in Fig. 1, the main shaft 4 has an increased diameter portion 4a formed to bulge in a radial direction on a side thereof, which is closer to the one end (table 5) than approximately the middle portion thereof in an axial direction. The main shaft 4 is rotatably supported on the frame 2 via the bearing 3 at the increased diameter portion 4a.

The through-hole 10a in the turret 10 is formed such that an inner diameter thereof is substantially the same as an outer diameter of a portion of the main shaft 4, which is closer to the other end than the increased diameter portion 4a. The turret 10 is fixed to the increased diameter portion 4a in a state where the portion of the main shaft 4 closer to the other end is inserted through the through-hole 10a and then abuts against an end surface of the increased diameter portion 4a, which is closer to the other end in the axial direction. As a result, the turret 10 is attached to the main shaft 4 so as not to be rotatable relative thereto. Fixing of the turret 10 to the increased diameter portion 4a is achieved by inserting a plurality of screw members (not shown) through the turret 10 in a plate thickness direction at locations thereon, which are offset from each other in a circumferential direction, and then screwing the screw members into the increased diameter portion 4a.

The turret 10 has, at an outer circumferential portion thereof, a plurality of holes (recesses) 13 formed at equal intervals in the circumferential direction to be opened in a circular shape on an outer circumferential surface 10b thereof. Each of the holes 13 is a receiving groove configured to allow the respective ball 14 as the engaging member to be received therein and corresponds to an engaging groove in the present invention. Each of the receiving grooves 13 is formed in such a shape that an inner circumferential surface thereof receives a part of the respective ball 14. The ball 14 is a sphere formed of a magnetic material and is received in the respective receiving groove 13. The turret 10 has magnets (not shown) embedded in the respective receiving grooves 13 to be exposed on a bottom surface of the respective receiving groove 13. Therefore, each of the balls 14 is kept received in the respective receiving groove 13 by a magnetic force of the respective magnet.

The driving shaft 8 is supported to be rotatable relative to the frame 2 via two bearings 16 and 16 such that an axis thereof is arranged in a direction perpendicular to the axial direction of the main shaft 4. As viewed in the axial direction of the main shaft 4, the driving shaft 8 is arranged at a position where the shaft center thereof coincides with the center of the ball 14 received in each of the receiving grooves 13 of the turret 10 attached to the main shaft 4. The driving shaft 8 is connected to an output shaft 6a of the driving motor 6 via a coupling 15. The worm 9 is provided on the driving shaft 8. In the present embodiment, it is assumed that the driving shaft 8 and the worm 9 are integrally formed with each other.

The worm 9 is a cylindrical drum-shaped member having a slender middle portion and has, on an outer circumferential surface thereof, a ball groove 9a configured to allow the ball 14 to be fitted therein. The ball groove 9a has a groove shape allowing a part of the ball 14 to be fitted therein and is formed in a spiral shape along an axial direction of the worm 9. A position of the worm 9 in the axial direction of the driving shaft 8 is set to a position where the balls 14 held on the turret 10 can be fitted in the ball groove 9a of the worm 9 in the state where the driving shaft 8 is arranged as described above.

In this way, the ball drive mechanism 7 is configured such that the worm 9 and the turret 10 are indirectly engaged with each other via the balls 14. In the ball drive mechanism 7, as the driving shaft 8 is rotationally driven by the driving motor 6, the balls 14 fitted in the ball groove 9a of the worm 9 roll and move in the axial direction of the worm 9 by rotation of the worm 9 in accordance with rotation of the driving shaft 8. As a result, the turret 10 holding the ball 14 rotates, and in turn, the main shaft 4 with the turret 10 fixed thereon rotates. That is, in the rotary table device 1 using the ball drive mechanism 7, rotation of the driving motor 6 is transmitted to the main shaft 4 via the ball drive mechanism 7 (worm 9 and turret 10), and thus the main shaft 4 is driven by the driving motor 6 via the ball drive mechanism 7.

In the rotary table device 1 configured as described above, the turret 10 of the ball drive mechanism 7 is constructed by an inner ring 11 attached to the main shaft 4 and an outer ring 12 attached to the inner ring 11. The receiving grooves 13 as the engaging grooves as described above are formed in the outer ring 12. The detailed configuration of the turret 10 is as follows.

The inner ring 11 is a disk-shaped member attached to the main shaft 4 as described above. Therefore, the inner ring 11 has a through-hole 11a formed concentrically to extend therethrough in a plate thickness direction thereof. The through-hole 11a has an inner diameter which is substantially the same as the outer diameter of the portion of the main shaft 4 closer to the other end. The through-hole 11a corresponds to the through-hole 10a allowing the turret 10 to be attached to the main shaft 4 as described above.

In the present embodiment, the inner ring 11 is formed of an invar alloy which is a low thermal expansion member. However, in the present invention, it is sufficient if the inner ring is formed by a low thermal expansion member, which is an alloy having a thermal expansion coefficient of 5×10⁻⁶/K or less. For example, the inner ring 11 may be formed of an alloy, such as Nobinite (Registered Trademark).

In the present embodiment, the inner ring 11 is formed such that a portion on one end surface side thereof in the plate thickness direction has a diameter larger than the other portion and thus a step portion is provided on an outer circumferential surface thereof. The inner ring 11 is formed such that a diameter of a smaller diameter portion 11b, which is a portion other than the larger diameter portion thereof, is sized to about 90% of the diameter of the turret 10.

The outer ring 12 is a disk-shaped member similar to the inner ring 11 and having a through-hole 12a extending therethrough in a plate thickness direction thereof. The through-hole 12a is formed such that an inner diameter thereof is slightly smaller than the outer diameter of the smaller diameter portion 11b of the inner ring 11.

In the outer ring 12, the plurality of receiving grooves 13 as described above are formed to be opened on an outer circumferential surface thereof. Therefore, a material forming the outer ring 12 is an iron-based material which is able to be hardened. The outer ring 12 of the present embodiment is formed of chromium molybdenum steel as such a hardenable iron-based material. However, in the present invention, the outer ring may be formed of any other iron-based materials as long as the materials are able to be hardened.

A dimension of the outer ring 12 in the plate thickness direction thereof is substantially the same as a dimension of the smaller diameter portion 11b of the inner ring 11 in the plate thickness direction thereof. The outer ring 12 is attached to the smaller diameter portion 11b to the inner ring 11 by shrinkage fit. The details of attachment by the shrinkage fit are as follows.

First, the outer ring 12 is heated to increase in diameter by thermal expansion. The heating is performed to such an extent that the inner diameter of the through-hole 12a of the outer ring 12 becomes larger than the outer diameter of the smaller diameter portion 11b of the inner ring 11 and is smaller than the outer diameter of the larger diameter portion as described above. Then, in such a state where the outer ring 12 has increased in diameter, the smaller diameter portion 11b of the inner ring 11 is inserted into the through-hole 12a, and an end surface of the step portion abuts against an end surface of the outer ring 12. Then, in such a state where both the end surfaces are positioned in place by abutting against each other, the outer ring 12 is cooled. As a result, the outer ring 12, which has increased in diameter by heating (thermal expansion), decreases in diameter, thereby causing the outer ring 12 to be fitted (shrinkage-fitted) to the smaller diameter portion 11b of the inner ring 11.

In the shrinkage-fitted state, the inner diameter of the outer ring 12 is equal to the outer diameter of the smaller diameter portion 11b of the inner ring 11 and thus is in an increased diameter state as compared to the original diameter thereof. In other words, the inner diameter of the outer ring 12 is increased by a difference (interference) between the original inner diameter thereof and the outer diameter of the smaller diameter portion 11b of the inner ring 11. At the same time, the outer diameter of the outer ring 12 is also increased by an amount (interference), by which the inner diameter thereof is increased.

However, the interference is determined in consideration of the highest temperature which the turret 10 may reach during processing. That is, the interference is determined such that an amount of increase in diameter of the outer ring 12 in the shrinkage-fitted state as described above is greater than an amount of increase in diameter of the outer ring 12 due to thermal expansion at the highest temperature.

With respect to attaching of the outer ring 12 to the inner ring 11 (smaller diameter portion 11b), fixing by a screw member or fixing by adhesive may be employed in addition to fixing by shrinkage fit as described above, if it is necessary to cause the attached state to become firmer.

According to the rotary table device 1 having the ball drive mechanism 7 including the turret 10 configured as described above, the turret 10 is configured such that a portion thereof including the outer circumferential portion is formed of the hardenable iron-base material, thereby ensuring that the receiving holes 13 as the engaging grooves provided on the outer circumferential portion can be formed with a high finishing accuracy. Further, the turret 10 has a two-layered structure, including the outer ring 12, which is made of the iron-based material and includes the outer circumferential portion, and the inner ring 11, on which the outer ring is attached (externally fitted) and which is made of an invar alloy which is a low thermal expansion member. Also, the turret 10 is configured such that fitting of the outer ring 12 on the inner ring 11 is achieved by shrinkage fit. In addition, the interference for shrinkage fit is set to be larger than an amount of increase in diameter of the outer ring 12 due to thermal expansion at the highest temperature.

According to this configuration, even if a temperature of the turret 10 increases during processing, an increase in diameter of the turret 10 due to thermal expansion does not occur and thus a change in pressure contact state of the balls 14 against the ball groove 9a of the worm 9 and the receiving grooves 13 of the turret 10 in accordance with an increase in diameter of the turret 10 does not occur. Therefore, a problem caused by such a change (increase in diameter of the turret 10 due to thermal expansion) can be prevented.

On the other hand, the present invention is not limited to the foregoing embodiment, but may also be embodied as aspects (variants) modified as the followings (1) to (3).
(1) In the foregoing embodiment, the inner ring 11 is formed to have the step portion on the outer circumferential surface, and the outer ring 12 is attached to the smaller diameter portion 11b of the inner ring 11. The diameter of the smaller diameter portion 11b is sized to about 90% of the diameter of the turret 10. That is, the inner ring is formed such that an outer diameter of a portion thereof (hereinafter referred to as an "externally fitting portion"), on which the outer ring is attached (externally fitted), is sized to about 90% of the outer diameter of the turret, which is a driven member. However, in the present invention, the inner ring is not limited to being formed in such a size.
   More specifically, in the driven member according to the present invention, it is sufficient if the outer ring can be provided with engaging grooves in the outer circumferential portion thereof and also if the outer ring has at least a size allowing the engaging grooves to be formed therein. Therefore, for example, even in the configuration of the forgoing embodiment, the outer ring may be configured to have a larger inner diameter as long as a thickness of an inner circumferential portion of the outer ring satisfies a required strength.
   On the other hand, for example, in the configuration of the forgoing embodiment, the outer ring may be configured to have a smaller inner diameter. However, in a case where the interference is the same, if the outer ring has such a smaller inner diameter, i.e., if a dimension of the outer ring in a radial direction (radial dimension) is increased, a force that the outer ring in the shrinkage-fitted state attempts to return to the original state (to decrease the diameter thereof) is also correspondingly increased. Therefore, depending on strength of a member forming the inner ring (strength of the inner ring), if the radial dimension of the outer ring is increased to a certain degree or more, the externally fitting portion of the inner ring is compressed and decreases in diameter, and thus an outer diameter of the externally fitting portion becomes smaller than the original outer diameter thereof. As a result, the outer diameter of the outer ring which is shrinkage-fitted (externally fitted) on the inner ring, i.e., the outer diameter of the turret becomes also smaller than an outer diameter thereof conceived in consideration of the original outer meter of the inner ring (externally fitting portion). Therefore, it is necessary to set the radial dimension of the outer ring to a size which prevents the inner ring (externally fitting portion) from decreasing in diameter due to shrinkage fit.
   In this way, the inner diameter of the outer ring can be made so large as to form an engaging groove within a range where there is no problem in strength as described above, and also so small as to prevent the inner ring from decrease in diameter as described above. That is, the inner diameter of the outer ring can be arbitrarily set within a range where these conditions are satisfied. In addition, the outer diameter of the externally fitting portion of the inner ring is set depending on the inner diameter of the outer ring. Accordingly, depending on the inner diameter of the outer ring to be set, the outer diameter of the externally fitting portion of the inner ring may be set to be differ from that in the forgoing embodiment, i.e., to have a ratio thereof to the outer diameter of the turret other than about 90%.
(2) In the forgoing embodiment, the inner ring 11 is formed to have the step portion on the outer circumferential surface thereof. However, in the present invention, the inner ring is not limited to being formed to have the step portion on the outer circumferential surface as described above, but may be formed such that the outer diameter thereof is constant along the plate thickness direction. In this case, a dimension of the inner ring in the plate thickness direction and a dimension of the outer ring in the plate thickness direction may be the same, or the dimension of the inner ring may be larger similarly to the forgoing embodiment. In the former case, the entire inner ring serves as the externally fitting portion described in the forgoing embodiment. In the latter case, a portion of the inner ring, on which the outer ring is to be fitted, becomes the externally fitting portion.
(3) With respect to the rotation drive device, on which the present invention is based, the rotation drive device is not limited to the rotary table device as the indexing device described in the forgoing embodiment. For example, the rotation drive device may be any other indexing device, such as a milling head (spindle head), which includes a spindle as a to-be-driven object supported on a support shaft corresponding to the main shaft and is configured to index an angular position of the spindle around an axis of the support shaft. Further, the rotation drive device is not limited to the indexing device, but may be, for example, a device which continuously rotationally drives a main shaft, to which a tool as a to-be-driven object is attached. On the other hand, with respect to the rotation drive device, the configuration in which the main shaft is integrally formed has been described in the forgoing embodiment. However, in the rotation drive device, on which the present invention is based, the main shaft may be constructed by combining a plurality of members.

Further, the driving-force transmission mechanism equipped in the rotation drive device is not limited to the ball drive mechanism as described in the forgoing embodiment. A roller gear cam mechanism, in which a roll gear cam as the drive transmission member and a turret as the driven member are indirectly engaged with each other via rollers as the engaging member, may be employed. In this case, as a hole (groove) formed in the turret to be opened on the outer circumferential surface thereof, a groove, in which a support shaft for rotatably supporting a roller is to be fitted, corresponds to the engaging groove in the driven member. In addition, the driving-force transmission mechanism is not limited to such a configuration in which the drive transmission member and the driven member are indirectly engaged with each other. A worm gear mechanism, in which a worm as the drive transmission member and a worm wheel as the driven member are directly engaged with each other, may be employed. In this case, a gap (tooth groove) between two adjacent teeth of gear teeth of the worm wheel corresponds to the engaging groove.

Further, the present invention is not limited to the embodiment and variants as described above, and various modifications thereof can be made without departing from the spirit and scope of the present invention.

## Claims

1. A rotation drive device (1) comprising a driving-force transmission mechanism (7) for transmitting rotation of a driving motor (6) to a main shaft (4), to which a to-be-driven object (5) is attached, wherein the driving-force transmission mechanism (7) comprises a driving shaft (8) connected to the driving motor (6), a drive transmission member (9) provided on the driving shaft (8), and a disk-shaped driven member (10) attached to the main shaft (4), and is configured such that the drive transmission member (9) and the driven member (10) are directly or indirectly engaged with each other,
wherein the driven member (10) comprises an inner ring (11) attached to the main shaft (4), and an outer ring (12) attached to the inner ring (11) by shrinkage fit and having an engaging groove (13) formed to be opened on an outer circumferential surface (10b) thereof,
the inner ring (11) is formed by a low thermal expansion member, which is an alloy having a thermal expansion coefficient of 5×10⁻⁶/K or less, and
the outer ring (12) is formed of a hardenable iron-based material.
